# EUROPÄISCHE PATENTSCHRIFT

(11) **EP 1 266 917 B1**
(45) Veröffentlichungstag und Bekanntmachung des Hinweises auf die Patenterteilung: **07.06.2006**
(21) Anmeldenummer: 02012301.4
(22) Anmeldetag: 04.06.2002
(51) Int. Cl.: C08G 12/42, C09D 161/32

(54) **Wasserverdünnbare verätherte Melamin-Formaldehyd-Harze**
Waterdilutable, etherified melamine-formaldehyde resins
Résines de mélamine-formaldéhyde éthérifées, diluables dans l'eau

(30) Priorität: 12.06.2001 DE 10128420
(43) Veröffentlichungstag der Anmeldung: 18.12.2002
(73) Patentinhaber: Cytec Surface Specialties Germany GmbH & Co. KG, 65203 Wiesbaden (DE)
(72) Erfinder: Wonner, Johann, Dr., 63110 Rodgau (DE); Scholl, Frank, 61352 Bad Homburg (DE); Schlöttig, Karin, 63477 Maintal (DE); Wölfert, Günter, 60318 Frankfurt/Main (DE)
(74) Vertreter: Deckers, Hellmuth Alexander

(56) Entgegenhaltungen:
- EP-A- 0 733 686
- DE-A- 2 502 168
- DE-A- 2 637 424
- FR-A- 2 559 491
- GB-A- 1 121 649
- US-A- 2 928 758
- PATENT ABSTRACTS OF JAPAN vol. 005, no. 075 (C-055), 19. Mai 1981 (1981-05-19) & JP 56 024415 A (HITACHI CHEM CO LTD), 9. März 1981 (1981-03-09)

## Beschreibung

Die Erfindung betrifft wasserverdünnbare verätherte Melamin-Formaldehyd-Harze, deren Herstellung und Verwendung zur Herstellung von Baustoffen und Isolationsmaterial, Vliesherstellung, Papier- und Textilausrüstung und Herstellung von Folien und Kanten.

Die Herstellung von wasserlöslichen, verätherten Melaminharzen ist allgemein bekannt. Zunächst wird bei pH-Werten von 7 bis 10 und Temperaturen von 40 bis 110 °C Melamin (gegebenenfalls im Gemisch mit anderen Aminoplastbildnern wie Harnstoff, Dicyandiamid, Acetoguanamin, Benzoguanamin und Caprinoguanamin) durch Zugabe von Formaldehyd oder dieses unter den Reaktionsbedingungen freisetzenden Verbindungen methyloliert und kondensiert, anschließend wird der Verätherungsalkohol zugegeben und bei pH-Werten von 1 bis 7 bei Temperaturen von 30 bis 80 °C umgesetzt. Die Kondensations- und Verätherungsbedingungen richten sich nach den für das Harz gewünschten Eigenschaften wie z.B. Viskosität und Wasserverdünnbarkeit. Als Verätherungsalkohol werden Methanol, Äthanol, n- und iso-Propanol sowie die isomeren Butanole (n-, sek.-, tert.- und iso-Butanol) bevorzugt, insbesondere Methanol, n-Butanol und Isobutanol.

Die Herstellung von anionisch modifizierten Melaminharzen, d.h. Cokondensaten aus Melamin, Formaldehyd, Salzen der Amidoschwefelsäure (Sulfaminsäure, Sulfamidsäure, Amidosulfonsäure), Natriumsulfit bzw. Natriumbisulfit (Natriumhydrogensulfit) u.a. ist ebenfalls bekannt.

So werden in der EP-A 0 176 709 (DE-A 34 30 248) Kondensate beschrieben, hergestellt durch Umsetzung von Melamin, Formaldehyd (Stoffmengenverhältnis M/F = 1 : 2 bis 1 : 3,2 mol/mol), einem Sulfamat (0,025 bis 0,045 mol Natriumsulfamat pro 1 mol Formaldehyd; entsprechend 0,05 bis 0,14 mol des Sulfamats pro 1 mol Melamin) und einem nichtreduzierenden Zucker (in einer Menge von mindestens 3 % der Masse der Reaktionsmischung) in Gegenwart eines (Thio-)Amids oder Amidins und eines C₁- bis C₃-Alkohols bei einem pH-Wert von über 8. Die erhaltenen Harze dienen als Überzugs-, Imprägnier- und Bindemittel für Faservliese. Die Harzlösungen sollen sich insbesondere durch eine sehr gute Lagerstabilität auszeichnen. Unter den angegebenen alkalischen Reaktionsbedingungen - pH höher als 8 - und den geringen Mengen an zugesetzten Alkoholen - in den angegebenen Beispielen jeweils unter 0,35 mol Methanol auf 1 mol Melamin - ist eine Verätherung ausgeschlossen. Die Wasserverdünnbarkeit der beschriebenen Harze liegen unter 1:7 (gemessen als Massenverhältnis von Harzlösung zu voll entsalztem ("VE"-) Wasser), unbegrenzte Mischbarkeit mit VE-Wasser wird nicht erreicht.

GB 1,121,649 betrifft ein Verfahren zur Herstellung verätherter Aminotriazinharze mit reduziertem Formaldehydgehalt. Dazu werden Lösungen der Aminotriazin-Formaldehyd-Harze einer Wasserdampfdestillation unterworfen, wobei vor oder nach diesem Schritt eine andere Methode der Formaldehyd-Entfemung angewandt werden kann, wie namentlich die Behandlung mit Schwefelverbindungen, die Formaldehyd-Bisulfit-Addukte oder Formaldehyd-Sulfoxylat-Addukte zu bilden vermögen, wobei diese Addukte abfiltriert oder mit Wasser ausgewaschen werden.

In EP 0 733 686 A2 sind wäßrige Dispersionen von verätherten Aminoplastharzen beschrieben, die Massenanteile von 10 % bis 50 % eines verätherten oder teilverätherten Aminoplastharzes und 0,1 % bis 5,5 % von anionischen Emulgatoren enthalten. Die anionischen Emulgatoren werden der Aminoplastharzlösung oder dem zum Dispergieren verwendeten Wasser zugesetzt. Die Emulgatoren weisen mindestens ein hydrophobes und mindestens ein hydrophiles Segment auf, wobei das hydrophobe Segment ausgewählt ist aus linearen, verzweigten oder cyclischen Alkyl- oder Alkylengruppen mit 3 bis 20 Kohlenstoffatomen sowie aus aromatischen Resten mit 6 bis 30 Kohlenstoffatomen.

In der JP 56-024 415 wird ein Verfahren zur Herstellung von Aminoplastharzen mit verringertem Gehalt an freiem Formaldehyd offenbart, wobei nach vollständig abgelaufener Reaktion zu verätherten Aminoplast-Formaldehyd-Kondensationsprodukten diesen eine wäßrige Lösung von Alkalisulfiten zugesetzt wird und bei Raumtemperatur oder unter Erwärmen reagieren gelassen wird. Dabei beträgt das Verhältnis der Stoffmengen von Melamin und Natriumsulfit 1 mol/0,25 mol (500 cm³ einer wäßrigen Lösung von Natriumsulfit mit einer Konzentration von 0,5 mol/l werden zu einem Kondensat von 126 g Melamin (= 1 mol) zugesetzt).

In der DE-A 22 59 680 wird ein Verfahren zur Herstellung von mit organischen Aminocarbon- oder Aminosulfonsäuren oder Natrium- oder Ammoniumsulfit oder -hydrogensulfit modifizierten und mit Alkoholen, die 1 bis 3 Atome enthalten, verätherten Melamin-Harnstoff-Formaldehydharzen mit einem Massenverhältnis von Melamin zu Harnstoff von 1:9 bis 9:1 beansprucht. Die Harze werden als chlorechte Appreturmittel eingesetzt. Die Aminogruppen des Melamins und des Harnstoffs müssen dazu vollständig methyloliert sein; die Kondensationsprodukte sollen möglichst keine freien NH-Gruppen mehr enthalten. Das Verfahren ist zweistufig: zunächst wird unter alkalischer Katalyse methyloliert und die anionische Komponente einkondensiert, anschließend wird mit Alkohol unter saurer Katalyse veräthert. Harze mit einem derartig hohen Methylolierungsgrad ergeben Produkte mit erhöhter Formaldehydabspaltung beim Trocknen.

In der US-A 3,487,048 (GB 1232031) wird die Methylolierung und Verätherung von Melamin in einem Schritt in saurem Medium beschrieben. Dazu werden 3 bis 6 mol Formaldehyd in Methanol mit Melamin unter Zusatz von Säuren, bevorzugt Amidosulfonsäure, als Katalysator direkt in einem Schritt zu einem methylverätherten Melaminharz umgesetzt. Die zugesetzte Amidosulfonsäure dient nur als Protonenspender, ein Einbau in das Harz wird nicht beschrieben oder für die Harzeigenschaften gefordert. Die in den Beispielen eingesetzte

Menge an Amidosulfonsäure liegt bei 1,3 bis 1,4 mmol pro 1 mol Melamin. Die Probleme der Wasserverdünnbarkeit und der Lagerstabilität werden nicht angesprochen.

Die Abspaltung von Formaldehyd bei der Härtung von (mit Methanol) verätherten Melaminharzen läßt sich dadurch reduzieren, daß man das Stoffmengenverhältnis F/M von Formaldehyd zu Melamin im Ansatz möglichst niedrig wählt. Auf der anderen Seite wird die untere Grenze für das Verhältnis F/M durch die Lösungseigenschaften von Melamin bei der Methylolierung bestimmt. Bei Harzen mit einem F/M von unter 1,9 ist es schwierig, länger haltbare Harze mit einer über die Lagerzeit stabil bleibenden hohen Wasserverträglichkeit zu erhalten. Es ist ebenfalls möglich, unverätherte Melaminharze mit einem F/M von unter 2 einzusetzen, die zur Erreichung einer unbegrenzten Wasserverträglichkeit mit Sulfamaten oder Sulfiten oder Bisulfiten (Hydrogensulfiten) modifiziert wurden. Die Haltbarkeit dieser Harze mit über die Lagerzeit stabil bleibender hoher Wasserverträglichkeit ist aber auf nur wenige Wochen begrenzt.

Es ist die Aufgabe der Erfindung, solche wäßrigen Melaminharze bereitzustellen, die gleichzeitig gute Lagerstabilität und unbegrenzte Wassermischbarkeit bei niedriger Formaldehyd-Abspaltung der damit getränkten bzw. ausgerüsteten Substrate aufweisen.

Als wäßrige Melaminharze werden solche Melaminharze bezeichnet, die einen Massenanteil von Wasser von mindestens 5 % aufweisen. Als "unbegrenzt wassermischbar" werden solche Melaminharze bezeichnet, die im System bestehend aus Melaminharz und Wasser bei Raumtemperatur (20 °C) keine Mischungslücke aufweisen. Makroskopisch läßt sich das Vorliegen einer Mischungslücke durch Bildung einer Trübung (Opazität) beim allmählichen Verdünnen des reinen Melaminharzes mit Wasser unter intensiver Durchmischung erkennen. Als "gut lagerstabil" gelten solche wäßrigen Melaminharze, die mindestens 6 Wochen nach ihrer Herstellung keine Entmischung (Trübung) zeigen.

Durch Einkondensation von Verbindungen mit anionischen Gruppen in (methyl)verätherte Melamin-Formaldehyd-Harze konnten neue Harze mit deutlich verbesserten Lagerstabilität bei unbegrenzter Wassermischbarkeit erhalten werden.

Unter Verbindungen mit anionischen Gruppen werden solche verstanden, die beim Lösen der damit modifizierten Melaminharze in Wasser oder wäßrigen Systemen durch Dissoziation in Wasser gelöste oder dispergierte Melaminharze ergeben, die anionische Gruppen in einkondensierter Form enthalten.

Gegenstand der Erfindung sind wasserverdünnbare verätherte Melamin-Formaldehyd-Harze, herstellbar durch Umsetzung von Melamin, Formaldehyd, einem Salz der Amidoschwefelsäure und einem Verätherungsalkohol mit einem Stoffmengenverhältnis in der Reaktionsmischung von Melamin : Formaldehyd : Salz der Amidoschwefelsäure : Verätherungsalkohol von 1: (1,7 bis 7,0) : (0,01 bis 0,4) : (5 bis 30), wobei die Salze der Amidoschwefelsäure bevorzugt aus Salzen der Sulfaminsäure (Sulfamidsäure, Amidoschwefelsäure, H₂N-SO₂-OH) mit Alkalimetallen und Ammonium ausgewählt sind.

Durch die Umsetzung bis zur vollständigen oder nahezu vollständigen Reaktion wird ein Harz erhalten, das Bausteine abgeleitet von den genannten Verbindungen in dem angegebenen Stoffmengenverhältnis enthält. Als nahezu vollständig wird eine Reaktion bezeichnet, in der der Umsetzungsgrad mindestens 80 %, bevorzugt mindestens 82 % und insbesondere mindestens 85 % beträgt.

Bevorzugt wird Melamin als einziger Aminoplastbildner eingesetzt, es ist jedoch auch möglich, bis zu 10 % des Melamins durch eine oder mehrere Verbindungen ausgewählt aus Acetoguanamin, Benzoguanamin und Caprinoguanamin zu ersetzen. Harnstoff und/oder Dicyandiamid und/oder Thioharnstoff sollten nicht oder nur in Massenanteilen von maximal 8 %, bezogen auf die gesamte Masse der Aminoplastbildner, eingesetzt werden. Bevorzugt ist es, höchstens 7 %, und besonders bevorzugt, höchstens als 6 % (Thio)Harnstoff bzw. Dicyandiamid einzusetzen, insbesondere sollte dieser Massenanteil maximal 5 % betragen. Es ist jedoch möglich, cyclische Harnstoffe wie Äthylenharnstoff (2-Imidazolidinon), Propylenharnstoff (2-Oxohexahydropyrimidin) oder Glykoluril in Massenanteilen von bis zu 10 % einzusetzen, bezogen auf die gesamte Masse der Aminoplastbildner.

Als Verätherungsalkohol können lineare oder verzweigte aliphatische Alkohole mit 1 bis 6, bevorzugt 1 bis 4 Kohlenstoffatomen einzeln oder in Mischung eingesetzt werden. Bevorzugt werden Methanol, Äthanol, n- und iso-Propanol, n-Butanol und Isobutanol; besonders bevorzugt ist Methanol.

Als Salz der Amidoschwefelsäure wird besonders bevorzugt das Natriumsalz von Amidoschwefelsäure eingesetzt.

Weiterer Gegenstand der Erfindung ist ein Verfahren zur Herstellung von verätherten Melaminharzen, wobei die Herstellung in zwei Stufen erfolgt: zunächst werden in Gegenwart der Salze der Amidoschwefelsäure Melamin und Formaldehyd unter alkalischen Bedingungen umgesetzt, anschließend wird zu der erhaltenen Harzlösung der Verätherungsalkohol, bevorzugt Methanol, und eine Säure zugesetzt und die Verätherung bis zu dem gewünschten Verätherungsgrad durchgeführt.

Es ist auch erfindungsgemäß möglich, die Salze der Amidoschwefelsäure erst in der zweiten Stufe, nach der Auflösung des Melamins in der wäßrigen Formaldehydlösung (d. i. nach Einsetzen der Methylolierungsreaktion) oder nach dem Abschluß der Methylolierungsreaktion zuzugeben. In jedem Fall sollte dieses Salz der Amidoschwefelsäure aber noch während der alkalischen Kondensationsphase zugegeben werden. Die Kondensation ist noch solange weiter zu führen, bis der Gehalt an nicht umgesetztem Salz der Amidoschwefelsäure auf 15 % oder weniger der eingesetzten Konzentration abgesunken ist. Danach wird die Reaktionslösung angesäuert und die Verätherung wird als dritte Stufe angeschlossen.

Als Abbruchkriterium für die Verätherung kann in allen Fällen die Verträglichkeit der Reaktionsmischung mit gesättigter Kochsalzlösung herangezogen werden. Vorzugsweise sollte die Verätherung solange durchgeführt werden, bis die Verträglichkeit der Reaktionsmischung mit der gesättigten Kochsalzlösung mindestens 1 : 2,0 beträgt. Die Verträglichkeit wird so bestimmt, daß bei inniger Mischung von einem Massenteil der Reaktionsmischung mit x Massenteilen der gesättigten Kochsalzlösung eine homogene Mischung ohne sichtbare Trübung erhalten wird. Dabei wird die Masse der zugesetzten Kochsalzlösung durch weitere Zugabe dieser Lösung gesteigert, die erhaltene Mischung wird wieder gerührt und visuell beurteilt. Zeigt sich noch keine Trübung, wird weitere Kochsalzlösung zugefügt etc. Als Verträglichkeit 1 : x wird das Verhältnis der Masse von (eingesetzter) Reaktionsmischung und Kochsalzlösung bezeichnet, bei dem eine bleibende Trübung auftrat.

Die so erhaltenen Harze eignen sich zur Verwendung zur Herstellung von Baustoffen, Isolationsmaterial, Vliesherstellung, Papier- und Textilausrüstung und Herstellung von Folien und Kanten. Dabei werden mineralische Stoffe wie Glaswolle, Steinwolle, Papiere, Dekorpapiere, Kartonagen, textile Gebilde wie Gewebe, Gelege, Gewirke, Filze, Vliese, jeweils aus Fasern oder Fäden aus Glas, Naturfasern, faserbildenden natürlichen und synthetischen Polymeren wie Cellulose, Polyamiden, Polyestern, Polyacrylnitril oder Polyolefinen mit wäßrigen Lösungen getränkt oder beschichtet, die diese Harze enthalten. Anschließend werden die imprägnierten oder beschichteten Stoffe getrocknet sowie gegebenenfalls auf die gewünschte Form oder Länge beschnitten.

Besondere Eignung zeigen die erfindungsgemäßen Harze bei der Ausrüstung von Papieren und bei der Bindung von Glasfaservliesen.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiel 1:

In einem 4 1-Dreihalskolben mit Rührer, Rückflußkühler und Innenthermometer wurden 73 g deionisiertes (entsalztes) Wasser und 499 g (3,6 x 1,8 mol) einer 39 %igen wäßrigen Formaldehyd-Lösung vorgelegt und auf 85 °C angeheizt. Dann wurden 3,6 ml 2,0 N (3,6 x 2,0 mmol) Natronlauge, 214 g (3,6 x 0,2 mol) einer 40 %igen wäßrigen Natriumsulfamatlösung - es stellte sich ein pH-Wert von ca. 8,7 ein - und sofort danach 454 g (3,6 mol) Melamin zugesetzt. Der Ansatz wurde unterstützt durch die Reaktionswärme innerhalb von 5 Minuten auf 95 °C angeheizt und noch weitere 10 Minuten bei 95 °C gerührt. Dann wurde auf 58 °C abgekühlt. Zu der Reaktionsmischung wurden 2307 g (3,6 x 20,0 mol) Methanol und 9,4 g (3,6 x 22,0 mmol) 53 %ige Salpetersäure zugesetzt. Dabei stellte sich ein pH-Wert von ca. 6,3 ein. Die Reaktionsmischung wurde auf 50 °C angeheizt, es wurde solange bei dieser Temperatur unter Rühren gehalten, bis die Verträglichkeit der Reaktionsmischung mit gesättigter Kochsalzlösung bei 20 °C 1 : 5,0 (Massenverhältnis des Reaktionsgemischs und der Kochsalzlösung) betrug. Die Reaktion wurde dann durch Zugabe von 40 ml (3,6 x 22 mmol) 2 N Natronlauge und Abkühlen auf 30 °C abgebrochen. Die Methanol-haltige Reaktionsmischung wurde an einem Rotationsverdampfer bei 100 hPa (100 mbar) bei einer Badtemperatur von ca. 60 °C eingeengt und anschließend durch Zugabe von deionisiertem Wasser auf einen Festkörper-Massenanteil von 75 % (Probeneinwaage 2 g, Trocknung während 1 Stunde bei 120 °C in einem Glasschälchen) eingestellt. Der pH-Wert der Harzlösung wurde durch Zugabe von verdünnter Natronlauge auf 10 eingestellt. Es wurden 972 g Harz mit einem Festkörper-Massenanteil von 75 %, einer Viskosität bei 23 °C von 2020 mPa·s und einer unbegrenzten Verträglichkeit (Mischbarkeit) mit deionisiertem Wasser erhalten. Der Gehalt an freiem Natriumsulfamat im Harz betrug (gemessen durch Ionenchromatographie) ca. 0,09 %. Damit lagen weniger als 1% des eingesetzten Natriumsulfamats frei vor. Das Harz hatte eine Haltbarkeit (Lagerstabilität) von mehr als 2 Monaten.

### Beispiel 2:

Es wurde wie in Beispiel 1 beschrieben verfahren, mit der Ausnahme, daß die wäßrige 40 %ige Natriumsulfamatlösung erst nach dem Lösen des Melamins, d.h. nach 10-minütigem Rühren bei 95 °C, zugesetzt wurde. Es wurden 955 g einer Harzlösung mit einem Festkörper-Massenanteil von 75 %, einer unbegrenzten Verträglichkeit (Mischbarkeit) mit deionisiertem Wasser, einer Viskosität bei 23 °C von 2530 mPa·s und einem Massenanteil an freiem Formaldehyd von 0,14 % erhalten.

### Vergleichsbeispiel 1:

In einem 4 l-Dreihalskolben mit Rührer, Rückflußkühler und Innenthermometer wurden 79 g deionisiertes Wasser und 541 g (3,9 x 1,8 mol) einer 39 %igen wäßrigen Formaldehyd-Lösung vorgelegt und auf 85 °C angeheizt. Dann wurden 3,9 ml 2,0 N (3,9 x 2,0 mmol) Natronlauge - es stellte sich ein pH-Wert von ca. 8,4 ein - und sofort danach 492 g (3,9 mol) Melamin zugesetzt. Der Ansatz wird unterstützt durch die Reaktionswärme innerhalb von 5 Minuten auf 95 °C angeheizt und noch weitere 10 Minuten bei 95 °C gerührt. Dann wurde auf 58 °C abgekühlt. Zu der Reaktionsmischung wurden 2499 g (3,9 x 20,0 mol) Methanol und 3,25 g (3,9 x 7,0 mmol) 53%ige Salpetersäure zugesetzt. Dabei stellte sich ein pH-Wert von ca. 6,1 ein. Die Reaktionsmischung wurde auf 50 °C angeheizt und solange bei dieser Temperatur unter Rühren gehalten, bis die Verträglichkeit der Reaktionsmischung mit gesättigter Kochsalzlösung bei 20 °C 1 : 5,0 (Massenverhältnis Reaktionsgemisch : Kochsalzlösung) betrug. Die Reaktion wurde durch Zugabe von 10 ml (3,9 x 5 mmol) 2 N Natronlauge und Abkühlen auf 30 °C abgebrochen. Die Methanol-haltige Reaktionsmischung wurde an einem Rotationsverdampfer bei 100 hPa (100 mbar) bei einer Badtemperatur von ca. 60 °C eingeengt und mit deionisiertem Wasser auf einen Festkörper-Massenanteil von 75% (2 g, 1 h 120 °C, Glasschälchen) eingestellt. Der pH-Wert der Harzlösung wurde durch Zugabe von verdünnter Natronlauge auf 10 eingestellt. Es wurden 1030 g Harz mit einem Festkörper-Massenanteil von 75 %, einer Viskosität bei 23 °C von 468 mPa·s und einer unbegrenzten Mischbarkeit (Verträglichkeit) mit deionisiertem Wasser erhalten. Das Harz wurde jedoch bereits nach 17 Tagen Lagerung bei Raumtemperatur (20 °C) trüb.

### Vergleichsbeispiel 2:

In einem 11-Dreihalskolben mit Rührer, Rückflußkühler und Innenthermometer wurden nacheinander 188 g deionisiertes Wasser, 313 g (2,4 x 1,7 mol) einer 39 %igen wäßrigen Formaldehyd-Lösung, 1,7 ml 2,0 N (2,4 x 1,4 mmol) Natronlauge, 107 g (2,4 x 0,15 mol) 40%ige Natriumsulfamatlösung und 303 g (2,4 mol) Melamin vorgelegt. Die Reaktionsmischung wurde auf 94 °C angeheizt und solange bei 94 °C gerührt (ca. 5 Minuten), bis der Ansatz klar wurde. Dann wurde auf 80 °C abgekühlt und bis zu einer Verträglichkeit der Reaktionsmischung mit gesättigter Kochsalzlösung bei 20 °C von 1 : 4,0 (Massenverhältnis Reaktionsgemisch : Kochsalzlösung) kondensiert. Die Reaktion wurde durch Abkühlen auf 20 °C abgebrochen. Der pH-Wert der Mischung wurde durch Zugabe von verdünnter Natronlauge auf ca. 9,5 eingestellt. Das Harz hatte einen Festkörper-Massenanteil von 51 % und eine unbegrenzte Mischbarkeit (Verträglichkeit) mit deionisiertem Wasser. Bereits nach 16 Tagen Lagerung bei 20 °C nahm jedoch die Wasserverträglichkeit auf unter 1 : 15 (Massenverhältnis Harz : deionisiertes Wasser) ab. Nach 5,5 Wochen wurde das Harz trüb.

### Anwendungsbeispiele:

### Trockenbruchwiderstand von imprägnierten Glasvliesen

Das Harz aus Beispiel 1 wurde gegen ein handelsübliches methylveräthertes Melaminharz mit einem Stoffmengenverhältnis von Formaldehyd-Bausteinen zu Melamin-Bausteinen (F/M) von 2,3 geprüft. Zu je 10 Massenteilen 75%igem Harz wurden 65 Massenteile deionisiertes Wasser und 0,35 Massenteile 25%ige Phosphorsäure gegeben. Damit wurde jeweils ein Streifen (16 x 24 cm) eines Glasfilterpapiers (Fa. Schleicher & Schüll, Typ GF 8, ca. 75 g/m²) durch Tauchen imprägniert. Das feuchte Imprägnat wurde mittels Glasstäben beidseitig abgestreift und 3 Minuten bei 180 °C getrocknet. Die Restfeuchte betrug danach noch ca. 0,5 %. Der Trockenbruchwiderstand, bestimmt an einem 1,5 cm breiten und 15 cm langen Probestreifen betrug in Längsrichtung für das mit Harz aus Beispiel 1 imprägnierte Vlies 32,3 N, für das mit dem handelsüblichen Harz imprägnierte 28,4 N.

### Abspaltbarer Formaldehyd

Zur Bestimmung der bei der Aushärtung frei werdenden Menge an Formaldehyd wurde das erfindungsgemäße Harz aus Beispiel 1 im Vergleich zu dem Harz aus Vergleichsbeispiel 1 und dem oben genannten handelsüblichen methylverätherten Melaminharz geprüft. Dazu wurden jeweils 20 g des betreffenden Harzes (75 %ig) mit 55 g deionisiertem Wasser und 2,25 g 10 %iger Phosphorsäure versetzt. Von dieser Tränkflotte wurden jeweils ca. 1,5 g gleichmäßig auf zwei Streifen (4 x 25 cm) Glasfilterpapier (Fa. Schleicher & Schüll, Typ GF 8, ca. 75 g/m²) aufgebracht und der in einem Rohr bei 170 °C und einem Luftstrom von 60 1/h innerhalb von 35 Minuten abgespaltene Formaldehyd gemessen.

Es wurden die folgenden Werte gefunden:

| | |
|---|---|
| Mit Harz aus Beispiel 1: | 1,1 % bezogen auf eingewogenes Festharz |
| Mit Harz aus Vergleichsbeispiel 1: | 1,5% bezogen auf eingewogenes Festharz |
| Mit handelsüblichem Harz: | 2,4 % bezogen auf eingewogenes Festharz |

### Formaldehydabspaltung unter Hydrolyseeinfluß am Beispiel eines imprägnierten Glasfilterpapiers (Anwendung Vlies/Textil)

Zur Bestimmung des abspaltbaren Formaldehyds an einem Endprodukt wurde das erfindungsgemäße Harz aus Beispiel 1 gegen das oben genannte handelsübliche methylverätherte Melaminharz geprüft. Dazu wurden jeweils 10 g des betreffenden Harzes (75%ig) mit 65 g deionisiertem Wasser und 0,35 g 25%iger Phosphorsäure versetzt und Glasfilterpapier (Fa. Schleicher & Schüll, Typ GF 8, ca. 75 g/m²) in dieser Flotte so imprägniert, daß die Imprägnate einen Harzanteil von ca. 20 % hatten. 24 Abschnitte des Imprägnats in der Größe 2,5 cm x 5,0 cm = 0,030 m² wurden in 500 ml-Flaschen aus Polyäthylen, die zuvor mit 50 ml deionisiertem Wasser gefüllt wurden, über dem Wasserspiegel aufgehängt und während 6, 16 und 24 Stunden bei 50 °C belassen. Der Formaldehydgehalt in dem kontaminierten Wasser wurde nach den Prüfzeiten durch Umsetzung des Formaldehyds mit Acetylaceton zu Diacetyldihydrolutidin (DDL) spektralphotometrisch bei der Wellenlänge 412 nm (Optimum des DDL) bestimmt. Es wurden die folgenden Werte für den Quotienten m_{F}/m_{H} (in %) der Masse m_{F} des abgespaltenen Formaldehyds und der Masse m_{H} des Festharzes in der Probe gefunden:

**Tabelle: Masse des abgespaltenen Formaldehyds bezogen auf die Masse des Festharzes in %**

| Prüfzeit bei 50 °C in Stunden | Harz aus Beispiel 1 | Handelsübliches methylveräthertes Melaminharz |
|---|---|---|
| 6 | 0,3 | 0,4 |
| 16 | 0,7 | 1,0 |
| 24 | 1,2 | 1,6 |

## Patentansprüche

1. Wasserverdünnbare verätherte Melamin-Formaldehyd-Harze, herstellbar durch Umsetzung von Melamin, Formaldehyd, einem Salz der Amidoschwefelsäure und einem Verätherungsalkohol in einem Stoffmengenverhältnis in der Reaktionsmischung von Melamin : Formaldehyd : Salz der Amidoschwefelsäure : Verätherungsalkohol von 1: (1,7 bis 7,0) : (0,01 bis 0,4) : (5 bis 30).

2. Wasserverdünnbare verätherte Melamin-Formaldehyd-Harze nach Anspruch 1, **dadurch gekennzeichnet, daß** das Salz der Amidoschwefelsäure aus Salzen der Amidoschwefelsäure H₂N-SO₂-OH mit Alkalimetallen und Ammonium ausgewählt ist.

3. Wasserverdünnbare verätherte Melamin-Formaldehyd-Harze nach Anspruch 1, **dadurch gekennzeichnet, daß** bis zu 10 % des Melamins durch eine oder mehrere Verbindungen ersetzt sind, ausgewählt aus Acetoguanamin, Benzoguanamin, Dicyandiamid, Caprinoguanamin und den cyclischen Harnstoffen 2-Imidazolidinon, 2-Oxohexahydropyrimidin und Glykoluril.

4. Wasserverdünnbare verätherte Melamin-Formaldehyd-Harze nach Anspruch 1, **dadurch gekennzeichnet, daß** bis zu 8 % des Melamins durch eine oder mehrere Verbindungen ersetzt sind, ausgewählt aus Harnstoff und Thioharnstoff sowie Dicyandiamid.

5. Wasserverdünnbare verätherte Melamin-Formaldehyd-Harze nach Anspruch 1, **dadurch gekennzeichnet, daß** der Verätherungsalkohol ausgewählt ist aus linearen und verzweigten aliphatischen Alkoholen mit 1 bis 6 Kohlenstoffatomen.

6. Wasserverdünnbare verätherte Melamin-Formaldehyd-Harze nach Anspruch 1, **dadurch gekennzeichnet, daß** der Verätherungsalkohol Methanol ist.

7. Wasserverdünnbare verätherte Melamin-Formaldehyd-Harze nach Anspruch 1, **dadurch gekennzeichnet, daß** das Natriumsalz der Amidoschwefelsäure zur Umsetzung verwendet wird.

8. Verfahren zur Herstellung von wasserverdünnbaren verätherten Melamin-Formaldehyd-Harzen, **dadurch gekennzeichnet, daß** in der ersten Stufe Melamin und Formaldehyd in Gegenwart eines Salzes der Amidoschwefelsäure unter alkalischen Bedingungen umgesetzt werden, und daß in der zweiten Stufe zu der erhaltenen Harzlösung der Verätherungsalkohol und eine Säure zugesetzt wird und die Verätherung durchgeführt wird.

9. Verfahren zur Herstellung von wasserverdünnbaren verätherten Melamin-Formaldehyd-Harzen, **dadurch gekennzeichnet, daß** in der ersten Stufe Melamin und Formaldehyd unter alkalischen Bedingungen bis zur Auflösung des Melamins umgesetzt werden, anschließend ein Salz der Amidoschwefelsäure zugesetzt und in der zweiten Stufe mit dem Reaktionsprodukt der ersten Stufe umgesetzt wird, und daß in der dritten Stufe zu der erhaltenen Harzlösung der Verätherungsalkohol und eine Säure zugesetzt wird und die Verätherung durchgeführt wird.

10. Verfahren nach Anspruch 8 oder 9, **dadurch gekennzeichnet, daß** die Verätherung solange durchgeführt wird, bis die Verträglichkeit der Harzlösung mit gesättigter Kochsalzlösung mindestens 1: 2,0 beträgt.

11. Verwendung der wasserverdünnbaren verätherten Melamin-Formaldehyd-Harze nach Anspruch 1 zur Herstellung von Imprägnaten, **dadurch gekennzeichnet, daß** Substrate ausgewählt aus mineralischen Stoffen, Papieren und Karton, und textilen Gebilden aus Fäden oder Fasern aus Glas oder natürlichen oder synthetischen Polymeren mit wäßrigen Lösungen der verätherten Melamin-Formaldehyd-Harze getränkt oder beschichtet werden, und die getränkten oder beschichteten Substrate anschließend getrocknet werden.

12. Verwendung nach Anspruch 11, **dadurch gekennzeichnet, daß** Glasfaser-Vliese als Substrat eingesetzt werden.

13. Verwendung nach Anspruch 11, **dadurch gekennzeichnet, daß** Papier als Substrat eingesetzt wird.

## Claims

1. Water-thinnable etherified melamine-formaldehyde resins obtainable by reacting melamine, formaldehyde, a salt of amidosulphuric acid and an etherification alcohol in a mixing ratio of melamine:formaldehyde:salt of amidosulphuric acid:etherification alcohol of 1:(1.7 to 7.0):(0.01 to 0.4):(5 to 30) in the reaction mixture.

2. Water-thinnable etherified melamine-formaldehyde resins according to Claim 1, **characterized in that** said salt of amidosulphuric acid is selected from salts of amidosulphuric acid H₂N-SO₂-OH with alkali metals and ammonium.

3. Water-thinnable etherified melamine-formaldehyde resins according to Claim 1, **characterized in that** up to 10% of the melamine is replaced by one or more compounds selected from the group consisting of acetoguanamine, benzoguanamine, dicyandiamide, caprinoguanamine and the cyclic ureas 2-imidazolidinone, 2-oxohexahydropyrimidine and glycoluril.

4. Water-thinnable etherified melamine-formaldehyde resins according to Claim 1, **characterized in that** up to 8% of the melamine is replaced by one or more compounds selected from the group consisting of urea and thiourea and also dicyandiamide.

5. Water-thinnable etherified melamine-formaldehyde resins according to Claim 1, **characterized in that** said etherification alcohol is selected from the group consisting of linear and branched aliphatic alcohols having 1 to 6 carbon atoms.

6. Water-thinnable etherified melamine-formaldehyde resins according to Claim 1, **characterized in that** said etherification alcohol is methanol.

7. Water-thinnable etherified melamine-formaldehyde resins according to Claim 1, **characterized in that** the sodium salt of amidosulphuric acid is used for the reaction.

8. Process for preparing water-thinnable etherified melamine-formaldehyde resins, **characterized in that** in the first stage melamine and formaldehyde are reacted under alkaline conditions in the presence of salt of amidosulphuric acid, and **in that** in the second stage the etherification alcohol and an acid are added to the resultant resin solution and the etherification is effected.

9. Process for preparing water-thinnable etherified melamine-formaldehyde resins, **characterized in that** in the first stage melamine and formaldehyde are reacted under alkaline conditions until the melamine dissolves, then a salt of amidosulphuric acid is added and is reacted in the second stage with the reaction product of the first stage, and **in that** in the third stage the etherification alcohol and an acid are added to the resultant resin solution and the etherification is effected.

10. Process according to Claim 8 or 9, **characterized in that** the etherification is carried on until the compatibility of said resin solution with saturated sodium chloride solution is not less than 1:2.0.

11. Use of the water-thinnable etherified melamine-formaldehyde resins according to Claim 1 for preparing impregnates, **characterized in that** substrates selected from the group consisting of mineral materials, papers and cardboard and textile structures composed of threads or fibres composed of glass or natural or synthetic polymers are saturated or coated with aqueous solutions of said etherified melamine-formaldehyde resins and the saturated or coated substrates are subsequently dried.

12. Use according to Claim 11, **characterized in that** glass fibre fleeces are used as substrate.

13. Use according to Claim 11, **characterized in that** paper is used as substrate.

## Revendications

1. Résine mélamine-formaldéhyde éthérifiée diluable à l'eau susceptible d'être obtenue par réaction de mélamine, de formaldéhyde, d'un sel de l'acide sulfamique et d'un alcool d'éthérification dans un rapport molaire dans le mélange réactionnel de mélamine : formaldéhyde : sel d'acide sulfamique : alcool d'éthérification de 1 : (1,7 à 7,0) : (0,01 à 0,4) : (5 à 30).

2. Résine mélamine-formaldéhyde éthérifiée diluable à l'eau selon la revendication 1, **caractérisée en ce que** le sel d'acide sulfamique est choisi parmi les sels de l'acide sulfamique H₂N-SO₂-OH de métaux alcalins et d'ammonium.

3. Résine mélamine-formaldéhyde éthérifiée diluable à l'eau selon la revendication 1, **caractérisée en ce que** jusqu'à 10% de la mélamine sont remplacés par un ou plusieurs composés choisis parmi l'acétoguanamine, la benzoguanamine, la dicyandiamide, la caprinoguanamine et les urées cycliques 2-imidazolidinone, 2-oxohexahydropyrimidine et glycoluril.

4. Résine mélamine-formaldéhyde éthérifiée diluable à l'eau selon la revendication 1, **caractérisée en ce que** jusqu'à 8% de la mélamine sont remplacés par un ou plusieurs composés choisis parmi l'urée et la thiourée ainsi que la dicyandiamide.

5. Résine mélamine-formaldéhyde éthérifiée diluable à l'eau selon la revendication 1, **caractérisée en ce que** l'alcool d'éthérification est choisi parmi des alcools aliphatiques linéaires et ramifiés ayant de 1 à 6 atomes de carbone.

6. Résine mélamine-formaldéhyde éthérifiée diluable à l'eau selon la revendication 1, **caractérisée en ce que** l'alcool d'éthérification est le méthanol.

7. Résine mélamine-formaldéhyde éthérifiée diluable à l'eau, selon la revendication 1, **caractérisée en ce qu'**on utilise le sel de sodium de l'acide sulfamique pour la réaction.

8. Procédé de fabrication d'une résine mélamine-formaldéhyde éthérifiée diluable à l'eau, **caractérisé en ce que** dans une première étape, la mélamine et le formaldéhyde sont mis en réaction en présence d'un sel de l'acide sulfamique en conditions alcalines, et **en ce que** dans une seconde étape, l'alcool d'éthérification et un acide sont ajoutés à la solution de résine obtenue et l'éthérification est effectuée.

9. Procédé de fabrication d'une résine mélamine-formaldéhyde éthérifiée diluable à l'eau, **caractérisé en ce que** dans une première étape, la mélamine et le formaldéhyde sont mis en réaction en conditions alcalines jusqu'à dissolution de la mélamine, suite à quoi un sel de l'acide sulfamique est ajouté, et, dans une deuxième étape réagit avec le produit de réaction de la première étape, et **en ce que**, dans une troisième étape, l'alcool d'éthérification et un acide sont ajoutés à la solution de résine obtenue et l'éthérification est effectuée.

10. Procédé selon la revendication 8 ou 9, **caractérisé en ce que** l'éthérification est effectuée jusqu'à ce que la compatibilité de la solution de résine avec une solution saturée de chlorure de sodium soit d'au moins 1:2,0.

11. Utilisation de la résine mélamine-formaldéhyde éthérifiée diluable à l'eau selon la revendication 1 pour la fabrication de liants d'imprégnation, **caractérisée en ce qu'**on imprègne ou on recouvre par des solutions aqueuses de la résine mélamine-formaldéhyde éthérifiée des substrats choisis parmi des substances minérales, des papiers et des cartons, et des produits textiles choisis parmi des fils et des fibres de verre ou des polymères naturels ou synthétiques, suite à quoi les substrats ainsi imprégnés ou recouverts sont séchés.

12. Utilisation selon la revendication 11, **caractérisée en ce qu'**on utilise des voiles de fibres de verre comme substrat.

13. Utilisation selon la revendication 11, **caractérisée en ce qu'**on utilise du papier comme substrat.
